# EUROPÄISCHE PATENTSCHRIFT

(11) **EP 0 812 262 B1**
(45) Veröffentlichungstag und Bekanntmachung des Hinweises auf die Patenterteilung: **19.05.1999**
(21) Anmeldenummer: 96901692.2
(22) Anmeldetag: 01.02.1996
(51) Int. Cl.: B32B 31/04, B32B 31/10, B32B 31/12, B31F 1/28

(54) **VERFAHREN ZUM HERSTELLEN VON WELLPAPPE**
CORRUGATED CARDBOARD MANUFACTURING PROCESS
PROCEDE DE FABRICATION DE CARTON ONDULE

(30) Priorität: 27.02.1995 DE 19506778
(43) Veröffentlichungstag der Anmeldung: 17.12.1997
(73) Patentinhaber: BHS Corrugated Maschinen- und Anlagenbau GmbH, 92729 Weiherhammer (DE)
(72) Erfinder: MOSBURGER, Hans, D-92729 Weiherhammer (DE); BRADATSCH, Edmund, D-92637 Welden (DE)
(74) Vertreter: Eder, Thomas, Dr.-Ing.
(86) Internationale Anmeldenummer: DE9600155
(87) Internationale Veröffentlichungsnummer: WO9626834

(56) Entgegenhaltungen:
- EP-A- 0 037 332
- EP-A- 0 380 083
- WO-A-87/05062
- WO-A-93/03913
- DE-A- 3 440 542
- DE-B- 1 191 679
- GB-A- 2 170 446

## Beschreibung

Die Erfindung betrifft ein Verfahren und eine Vorrichtung zum Herstellen von Wellpappe, insbesondere fünffacher oder Doppel-Doppel-Wellpappe mit den Merkmalen des Oberbegriffs des Patentanspruchs 1 bzw. den Merkmalen des Oberbegriffs des Patentanspruchs 10.

Für das Zusammenführen und Verkleben von wenigstens drei einzelnen Teilbahnen, wie das beispielsweise bei der Herstellung von fünffacher, d.h. sogenannter Doppel-Doppel-Wellpappe erforderlich ist, wird bisher in der Regel ein Dreifach-Vorheizer als eigenständige Einheit sowie ein nachfolgend angeordnetes doppeltes Leimauftragswerk, ebenfalls als selbständige Einheit verwendet. Mit Hilfe des Leimauftragswerkes werden zwei der drei zu verklebenden Bahnen an einer Oberfläche mit Leim beschichtet und zusammen mit einer weiteren, unbeleimten Bahn einer Anpreßvorrichtung zugeführt. Mit anderen Worten: Nach dem Beleimen zweier von drei zu verklebenden Bahnen werden diese zusammen mit der dritten Bahn an einem einzigen Punkt zusammengeführt und die einander gegenüberliegenden Oberflächen der einzelnen Teilbahnen aufeinandergepreßt. Das Zusammenführen der Teilbahnen erfolgt in der Regel in einer Beklebemaschine mit zwei senkrecht zum Bahnlauf orientierten Eingangswalzen, über die die einzelnen Teilbahnen einer Heizpartie zugeführt werden, die zum Aushärten des Klebers und zum Trocknen der fertigen Bahn dient. Um ein schnelles Gelieren des Leimes und damit eine schnelles Naßkleben nach dem Zusammenführen der Bahnen zu erreichen, ist es erforderlich, zumindest die zu beleimenden Bahnen vor dem Auftragen des Leims zu beheizen. Hierzu wird dem doppelten Leimauftragswerk üblicherweise ein Vorheizer mit mehreren Vorheizzylindern vorangestellt.

Nachteilig bei diesem bekannten Verfahren bzw. dieser bekannten Vorrichtung zum Herstellen mehrlagiger, insbesondere fünffacher oder Doppel-Doppel-Wellpappe ist jedoch, daß zwischen den Leimauftragspunkten des doppelten Leimauftragswerkes und dem Zusammenführpunkt der einzelnen Teilbahnen in der Beklebemaschine relativ große Bahnlängen erforderlich sind. Hierdurch besteht abhängig von der Temperatur der dem Leimwerk zugeführten Bahnen die Gefahr, daß dem Leim vor dem Eintreten des Gelierprozesses zuviel Feuchtigkeit entzogen wird, was sich nachteilig auf die Haftkraft des Leims beim Zusammenführen der einzelnen Teilbahnen auswirkt. Wegen der Baugröße der Leimwerke ist es auch - wenn überhaupt - nur mit großem konstruktiven Aufwand möglich, die Bahnlänge sämtlicher Teilbahnen zwischen dem Leimauftragspunkt und dem Zusammenführpunkt auf das gewünschte Maß zu verkürzen. Darüber hinaus ist durch die relativ großen Abstände zwischen Vorheizern und Bahnzusammenführungsstelle ein starkes Abkühlen der einzelnen Bahnen gegeben, was dazu führt, daß die Bahn nicht die für die Verklebung angestrebte optimale Temperatur hat.

Der Erfindung liegt daher die Aufgabe zugrunde, ein Verfahren und eine Vorrichtung zum Herstellen von Wellpappe zu schaffen, wobei die vorgenannten Nachteile vermieden und eine entsprechende Haftkraft des Leims nach dem Zusammenführen der einzelnen Teilbahnen schnell erreicht wird.

Die Erfindung löst diese Aufgabe mit den Merkmalen der Patentansprüche 1 bzw. 10.

Durch das Zusammenführen von jeweils nur zwei Teilbahnen in einem Zusammenführpunkt und die damit verbundene örtliche Trennung der beiden Leimwerke ist es möglich, die Bahnlänge zwischen den Leimauftragspunkten und den Zusammenführpunkten so kleinzuhalten, daß wegen der damit korrespondierenden geringen Bahnlaufzeit dem Leim, insbesondere bei niedrigen Geschwindigkeiten, keine unzulässig große Feuchtigkeitsmenge durch das Eindringen der Feuchtigkeit in die beleimte Bahn entzogen wird.

Dabei wird die maximale Bahnlänge zwischen Leimauftragspunkt und Zusammenführpunkt vorzugsweise so gewählt, daß die Bahnlaufzeit bei maximaler Geschwindigkeit ungefähr 200 ms ist, was bei einer Bahngeschwindigkeit von 300 m/min einer Bahnlänge von ungefähr 1 m entspricht.

Da die Bahnen vor dem Leimauftrag vorgeheizt werden, ergibt sich des weiteren der Vorteil, daß die Bahnen bis zum Zusammenführpunkt gegenüber bekannten Verfahren und Vorrichtungen deutlich weniger abkühlen, so daß diese Wärme noch für das Gelieren und Aushärten des Klebers sowie für das Trocknen der verklebten Bahnen zur Verfügung steht. Hierdurch kann die Längenausdehnung der nachgeschalteten Heizpartie verringert werden.

Beim erfindungsgemäßen Verfahren wird die Halbfertigbahn, d.h. die beiden zunächst verklebten Teilbahnen zwischen dem ersten und zweiten Zusammenführpunkt wenigstens an derjenigen Oberfläche beheizt, die am zweiten Zusammenführpunkt mit der ihr zugekehrten Oberfläche der dritten Teilbahn verklebt wird. Auch hierdurch wird sowohl der Gelierprozeß bzw. das Aushärten des Leims beschleunigt als auch die Trockenzeit der fertigen Wellpappenbahn verkürzt. Durch dieses Zuführen einer ausreichenden Wärmemenge in spätere Zwischenschichten der fertigen Bahn gegenüber bekannten Vorrichtungen kann ebenfalls die Länge der sich anschließenden Heizpartie deutlich verkürzt werden.

Bei der bevorzugten Ausführungsform der erfindungsgemäßen Vorrichtung sind Vorheizer und Anpreßvorrichtung und/oder Leimwerk zu einer Einheit zusammenbaubar oder integriert ausgebildet. Hierdurch wird auf einfache Weise die gewünschte Verkürzung der Bahnlängen zwischen Vorheizer und Leimauftragspunkt bzw. Vorheizer und Zusammenführpunkt erreicht.

Vorheizer und Anpreßvorrichtung und/oder Leimwerk zu einer Einheit zusammenbaubar oder integriert auszubilden, ist selbstverständlich nicht auf den Fall des Verklebens von wenigstens drei Teilbahnen zu einer Wellpappe beschränkt, sondern kann auch dann Anwendung finden, wenn lediglich zwei einzelne Teilbahnen miteinander zu verkleben sind, wie dies beispielsweise bei der Herstellung einer doppelseitigen Wellpappe aus einer einseitigen Wellpappe und einer einfachen Bahn erfolgt.

Bei der erfindungsgemäßen Vorrichtung ist zwischen den beiden Zusammenführpunkten eine Heizvorrichtung vorgesehen, welche beiden Oberflächen der Halbfertigbahn eine vorbestimmte Wärmemenge zuführt. Die nicht beheizte Bahnlänge zwischen dieser Heizvorrichtung und dem zweiten Zusammenführpunkt wird vorzugsweise ebenfalls möglichst kurz gehalten, um einen unnötigen Wärmeverlust zu vermeiden.

In einer Ausführungsform der Erfindung weist die zwischen dem Zusammenführpunkten angeordnete Heizvorrichtung eine beheizte Anlagefläche für das Beheizen der einen Oberfläche der betreffenden Bahn und einen oder mehrere sich in Richtung und/oder quer zur Bewegungsrichtung der Bahn erstreckende, beheizte Druckschuhe auf, welche die Bahn gegen die Anlagefläche drücken und die andere Oberfläche der Bahn beheizen. Hierbei wird vorzugsweise auf ein zwischen den beheizten Flächen der Druckschuhe angeordnetes Endlosband für den Transport der Bahn verzichtet, um einen Wärmeübergangswiderstand zwischen den beheizten Oberflächen und der Bahnoberfläche zu vermeiden.

Bei einer anderen Ausführungsform der Erfindung kann die Heizvorrichtung in Richtung der Bahnbewegung in mehrere Segmente unterteilt sein, wobei die Segmente vorzugsweise abwechselnd die eine oder andere Bahnoberfläche beheizen. Auf diese Weise kann in jedem Segment wieder eine Transportvorrichtung, beispielsweise in Form eines angetriebenen endlosen Transportbandes, vorgesehen sein und gleichzeitig die Beheizung beider Oberflächen der Bahn gewährleistet werden. Allerdings erfolgt die Beheizung der Bahnoberflächen im Gegensatz zur Verwendung von beheizten Druckschuhen nicht gleichzeitig, sondern jeweils nacheinander, so daß die Länge der Heizvorrichtung entsprechend größer gewählt werden muß.

In einer Weiterbildung der erfindungsgemäßen Vorrichtung können die beheizten Anlageflächen der Segmente abwechselnd konkav und konvex ausgebildet sein, so daß durch das Hindurchziehen der Bahn durch die nacheinander angeordneten Segmente die Bahn allein durch die Bahnspannung an die beheizten Anlageflächen angedrückt wird. Auf diese Weise kann auf die Verwendung zusätzlicher Andruckelemente verzichtet werden. Auch diese Heizvorrichtung kann nicht nur in Verbindung mit dem erfindungsgemäßen Verfahren bzw. der erfindungsgemäßen Vorrichtung, sondern auch in Verbindung mit jeder anderen Einrichtung zur Herstellung von Wellpappe oder anderen Einrichtungen zur Herstellung und Bearbeitung von Bahnen eingesetzt werden.

Um bei einer Erhöhung der Bahngeschwindigkeit die notwendige Zeit für den Feuchtigkeitsentzug aus den Leimstellen zu gewährleisten, kann nach einer Ausgestaltung der Erfindung das Leimwerk ggf. mit dem angebauten Vorheizer verschiebbar sein, so daß der Abstand zwischen Zusammenführpunkt der Teilbahnen und der jeweiligen Auftragsstelle des Leimes vergrößert wird.

Weitere Ausführungsformen der Erfindung ergeben sich aus den Unteransprüchen.

Die Erfindung wird nachfolgend anhand eines in der Zeichnung dargestellten Ausführungsbeispiels näher erläutert. In der Zeichnung zeigen:
- Fig. 1: eine teilweise geschnittene schematische Darstellung eines Ausführungsbeispiels der erfindungsgemäßen Einrichtung zum Verkleben von mindestens drei einzelnen Teilbahnen;
- Fig. 2: eine teilweise geschnittene schematische Darstellung eines weiteren Ausführungsbeispiels der Heizvorrichtung in Fig. 1 und
- Fig. 3: eine dritte Ausführungsform der Heizvorrichtung der Einrichtung in Fig. 1;
- Fig. 4: eine schematische Teilansicht von Fig. 1 mit verschiebbarer Einheit für Leimwerk und Vorheizer.

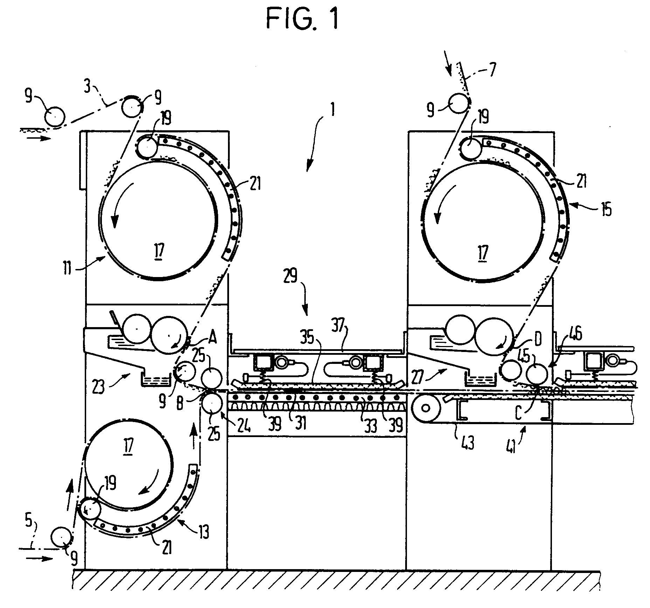

Die in Fig. 1 dargestellte Einrichtung dient zum Verkleben von mindestens drei einzelnen Teilbahnen 3, 5, 7 und kann als solche Bestandteil einer nicht näher dargestellten Wellpappenanlage sein. Das in Fig. 1 dargestellte Ausführungsbeispiel erläutert das erfindungsgemäße Verfahren bzw. die Funktionsweise der erfindungsgemäßen Einrichtung am Beispiel der Herstellung fünffacher oder sogenannter Doppel-Doppel-Wellpappe, die aus drei beabstandeten glatten Bahnen und zwei zwischen den glatten Bahnen angeordneten und mit diesen verklebten geriffelten Bahnen besteht.

Doppel-Doppel-Wellpappe wird üblicherweise durch das Zusammenführen und Verkleben von zwei einseitigen Wellpappenbahnen und einer glatten Bahn hergestellt. Entsprechend wird der Einrichtung 1 eine erste einseitige Wellpappenbahn 3, eine glatte Bahn 5 und eine zweite einseitige Wellpappenbahn 7 zugeführt. Dabei können die einseitigen Wellpappenbahnen 3, 7 in üblicher Weise von einseitigen Wellappenmaschinen und die glatte Bahn 5 von einer üblichen Abrollvorrichtung der nicht näher dargestellten Wellpappenanlage zugeführt werden.

Die Zuführung der drei Teilbahnen 3, 5, 7 erfolgt über jeweils eine bzw. zwei Umlenkwalzen 9. Wie bei der Herstellung von mehrlagiger Wellpappe üblich, werden die einzelnen Teilbahnen zunächst Vorheizern 11, 13, 15 zugeführt und die Bahnen vor dem Beleimen bzw. Zusammenführen und Verkleben erhitzt.

Wie in Fig. 1 dargestellt, sind die Vorheizer 11, 13, 15 gegenüber herkömmlichen Vorheizern so ausgebildet, daß nicht nur eine Oberfläche, sondern beide Oberflächen der dem Vorheizer zugeführten Bahn erhitzt werden.

Hierzu weist jeder Vorheizer 11, 13, 15 eine beheizte Trommel 17 auf. Diese kann beispielsweise durch Dampf oder auf sonstige Weise innen beheizt sein. Die Trommeln 17 sind drehbar gelagert und können jeweils in der angegebenen Pfeilrichtung angetrieben sein. Der Trommelmantel besteht aus gut wärmeleitenden Material, vorzugsweise aus Metall.

Die den Vorheizern 11, 13, 15 zugeführten Bahnen 3, 5, 7 legen sich mit der der Trommel 17 zugekehrten Oberfläche an den Trommelmantel an und umschlingen die Trommel mit einem vorbestimmten Umschlingungswinkel. Auslaufend sind die Bahnen 3, 5, 7 über eine, vorzugsweise drehbar gelagerte Umlenkwalze 19 geführt. Von der Walze 19 laufen die Bahnen 3, 5, 7 weiter über eine Heizfläche 21, an der sie durch die Umlenkung durch die betreffende Walze 19 mit der jeweils nicht zuvor durch die Trommel 17 beheizten Oberfläche anliegen. Auf diese Weise können beide Oberflächen der den Vorheizern 11, 13, 15 zugeführten Bahnen 3, 5, 7 beheizt werden.

Jede Heizfläche 21 ist so mit der Umlenkwalze 19 verbunden, daß beide konzentrisch zur Achse der Trommel 17 verschwenkt werden können. Auf diese Weise kann die aus der Heizfläche 21 und der Umlenkwalze 19 bestehende Anordnung aus der in Fig. 1 dargestellten Stellung mit dem maximal möglichen Umschlingungswinkel der betreffenden Bahn (3, 5, 7) um die Trommel 17 bis in eine solche Stellung verschwenkt werden, in der die Bahn die Trommel 17 mit dem minimalen Winkel umschlingt, wobei in dieser Stellung die zuvor an der Heizfläche 21 anliegende Oberfläche der Bahn 3, 5, 7 vollständig von der Heizfläche abgehoben wird. In der Stellung mit dem kleinsten Umschlingungswinkel wird daher lediglich die am Mantel der Trommel 17 anliegende Oberfläche der Bahn 3, 5, 7 beheizt.

Wie in Fig. 1 dargestellt, wird die einseitige Wellpappenbahn 3 zunächst mittels des Vorheizers 11 in der gewünschten Weise, vorzugsweise beidseitig, beheizt und anschließend einem ersten Leimwerk 23 zugeführt. Das Leimwerk 23 kann von an sich bekannter Bauart sein. Nach dem Auftragen des Leims auf die Erhebungen der geriffelten Bahn der einseitigen Wellpappe 3 wird diese über eine weitere Umlenkwalze 9 zusammen mit der glatten Bahn 5 einer Anpreßvorrichtung 24 in Form eines Paares zusammenwirkender Walzen 25 zugeführt. Das Zuführen der glatten Bahn 5 erfolgt in analoger Weise, d.h. auch der Bahn 5 wird mittels des Vorheizers 13 an beiden Oberflächen eine vorbestimmte Wärmemenge zugeführt. Die Walzen 25 pressen nunmehr die glatte Bahn 5 auf die mit Leim beschichteten Erhebungen der einseitigen Wellpappenbahn 3 und bewirken so das Verkleben der beiden Bahnen.

Durch die relativ geringe Bahnlänge der Bahn 3 zwischen dem Verlassen der Heizfläche 21 des Vorheizers 11 und dem Leimauftragspunkt A im Leimwerk 23 erfolgt während der Bewegung der Bahn zwischen diesen Punkten nur eine relativ geringe Abkühlung. Gegenüber bekannten Maschinen, bei denen die betreffende Bahnlänge zwischen dem Verlassen der Heizfläche des Vorheizers und dem Leimauftragspunkt ca. 3 m oder mehr beträgt, wird bei der Vorrichtung gemäß Fig. 1, d.h. durch das direkte Heranstellen, Anbauen oder Integrieren des Vorheizers an das bzw. in das Leimwerk eine deutlich geringere Bahnlänge erreicht. Konkret lassen sich Bahnlängen von weniger als 1 m, vorzugsweise weniger als 0,5 m erreichen, was bei einer Bahngeschwindigkeit von 300 m/min einer Bahnlaufzeit von 200 ms bzw. 100 ms entspricht. Durch die geringe Bahnlänge zwischen Vorheizer und Leimauftragspunkt und die damit verbundene geringe Abkühlung der Bahn wird der Gelierprozeß des Klebers nach dessem Auftragen auf die Bahn schneller bewirkt als bei bekannten Maschinen, so daß nach dem Zusammenführen der Bahnen 3 und 5 eine Naßklebung mit ausreichend hoher Klebekraft sehr rasch erfolgt.

Mindestens ebenso wichtig wie eine geringe Bahnlänge zwischen Vorheizer und Leimauftragspunkt ist das Erreichen einer möglichst optimalen Bahnlänge zwischen Leimauftragspunkt A und Verklebepunkt oder Zusammenführpunkt B, welcher bei dem in Fig. 1 dargestellten Ausführungsbeispiel zwischen den beiden Walzen 25 liegt. Eine kurze Bahnlänge zwischen Leimauftragspunkt A und Zusammenführpunkt B gewährleistet, daß während der Laufzeit der Bahn zwischen diesen beiden Punkten dem Kleber durch die Kapillarwirkung der Bahnoberfläche nicht eine unzulässig hohe Feuchtigkeitsmenge entzogen wird, was sich nachteilig auf die Klebekraft auswirken würde.

Während bei bekannten Vorrichtungen zum Verkleben von mindestens drei einzelnen Teilbahnen zwei der Teilbahnen mit Leim beschichtet und anschließend zusammen mit der dritten Teilbahn in einem einzigen Zusammenführpunkt zusammengeführt werden, wird bei der Vorrichtung gemäß Fig. 1 bzw. bei dem durch diese Vorrichtung realisierten Verfahren zunächst nur die erste mit der zweiten Teilbahn und erst anschließend die dritte Teilbahn mit der so entstandenen Halbfertigbahn verklebt. Durch die Verwendung zweier Zusammenführpunkte bzw. Verklebepunkte B bzw. C muß vor jedem Zusammenführpunkt B, C lediglich ein einziges Leimwerk 23 bzw. 27 angeordnet werden, welches eben aus diesem Grund sehr nahe an dem Zusammenführpunkt B bzw. C herangerückt werden kann und eine Integration eines Vorheizers erleichtert. Dies ist wegen der Baugröße der Leimwerke bei der Verwendung zweier Leimwerke vor einem einzigen Zusammenführpunkt nicht oder nur mit großem konstruktiven Aufwand möglich.

Gegenüber bekannten Vorrichtungen, bei denen der Abstand zwischen Auslauf, Vorheizer un Zusammenführpunkt B 5 m oder mehr beträgt, kann bei dem erfindungsgemäßen Verfahren bzw. der erfindungsgemäßen Vorrichtung durch das nunmehr mögliche enge Heranrücken des Leimwerks zusammen mit den Vorheizern an den Zusammenführpunkt eine Bahnlänge von 1,5 m oder weniger erreicht werden. Gleichzeitig wird die Bahnlänge zwischen Leimauftragspunkt A und Zusammenführpunkt B von ca. 2 m auf ca. 0,5 m verkürzt.

Vorzugsweise beträgt die Bahnlänge zwischen Leimauftragspunkt und Zusammenführpunkt weniger als 1 m, was bei einer Bahngeschwindigkeit von 300 m/min einer Bahnlaufzeit zwischen den Punkten A und B von weniger als 200 ms entspricht. Zwischen Leimauftragspunkt A und Zusammenführpunkt B kann eine zusätzliche, nicht dargestellte Heizeinrichtung für die Wellenseite vorgesehen sein.

Nach dem Zusammenführen bzw. Verkleben der Bahnen durch das Walzenpaar 25 wird die Halbfertigbahn einer Heizvorrichtung 29 zugeführt, die - wie in Fig. 1 dargestellt - vorzugsweise beide Oberflächen der aus den verklebten Bahnen 3 und 5 bestehenden Halbfertigbahn 31 beheizt.

Die Heizvorrichtung 29 weist hierzu eine beheizte Platte 33 auf, auf der die Halbfertigbahn 31 mit ihrer einen (in Fig. 1 unteren) Oberfläche aufliegt. Zusätzlich umfaßt die Heizvorrichtung 29 einen oder mehrere beheizte Druckschuhe 35, die vorzugsweise durch Federbeaufschlagung mittels in einem Rahmen 37 angeordneter Federn 39 die Halbfertigbahn an die beheizten Unterseiten der Druckschuhe 35 bzw. an die Oberfläche der beheizten Platte 33 andrücken. Selbstverständlich können sowohl in Richtung der Bahnbewegung mehrere hintereinander angeordnete Druckschuhe als auch quer zur Bahn mehrere Druckschuhe vorgesehen sein. Hierdurch wird ein gleichmäßiges Andrücken der Halbfertigbahn auch bei geringer Unebenheit der Bahn bzw. der beheizten Oberflächen erreicht.

Durch das Beheizen beider Oberflächen der zugeführten Bahnen 3 und 5 sowie durch die geringe Bahnlänge zwischen Vorheizer und Zusammenführpunkt B wird zudem erreicht, daß die Längenausdehnung der Heizvorrichtung 29 relativ gering gehalten werden kann, da diese nicht das vollständige Aushärten des Leims und Trocknen der Halbfertigbahn 31 bewirken soll, sondern im wesentlichen dazu dient, vor dem Zuführen und Verkleben der Halbfertigbahn 31 mit der dritten Bahn 7 eine ausreichend fest (Naß-) Verklebung innerhalb der Halbfertigbahn zu erreichen.

Des weiteren kommt der Heizvorrichtung 29 die Aufgabe zu, zusätzliche Wärme in die an die beheizten Druckschuhe 35 angrenzende Oberfläche einzubringen, welche mit der vorgeheizten einseitigen Wellpappenbahn 7 verklebt wird. Diese in die Halbfertigbahn eingebrachte Wärme dient dazu eine schnellere Verklebung der Bahn 7 mit der Bahn 31 zu erreichen, wodurch später ein schnelleres Aushärten und Trocknen der fertigen Doppel-Doppel-Wellpappenbahn erreicht wird.

Das Zuführen der einseitigen Wellpappenbahn 7 erfolgt in der vorstehend für das Zuführen der einseitigen Wellpappenbahn 3 beschriebenen Art und Weise. Durch das möglichst nahe Heranrükken des Vorheizers 15 an das Leimwerk 27 und das Anordnen des Leimwerks 27 möglichst nahe am Zusammenführpunkt C werden wiederum die bereits zuvor beschriebenen Vorteile erreicht. Gleiches gilt für das beidseitige Beheizen der zugeführten einseitigen Wellpappenbahn 7.

Anschließend an die Heizvorrichtung 29 durchläuft die Halbfertigbahn 31 eine weitere Heizvorrichtung 41, z. B. in Form von Heizschuhen 41', die jedoch nur die obere Oberfläche der Halbfertigbahn 31 beheizt und zudem ein Endlostransportband 43 für die Bewegung der Halbfertigbahn 31 durch die erfindungsgemäße Einrichtung aufweist. Das Endlostransportband 43 kann auch bezeizt sein. Darüber hinaus bildet das Endlosband 43 der Heizvorrichtung 41 zusammen mit einer Andrückwalze 45 eine Anpreßvorrichtung 46 für das Zusammenführen bzw. Verkleben der Halbfertigbahn 31 mit der einseitigen Wellpappenbahn 7 im Zusammenführpunkt oder Verklebepunkt C.

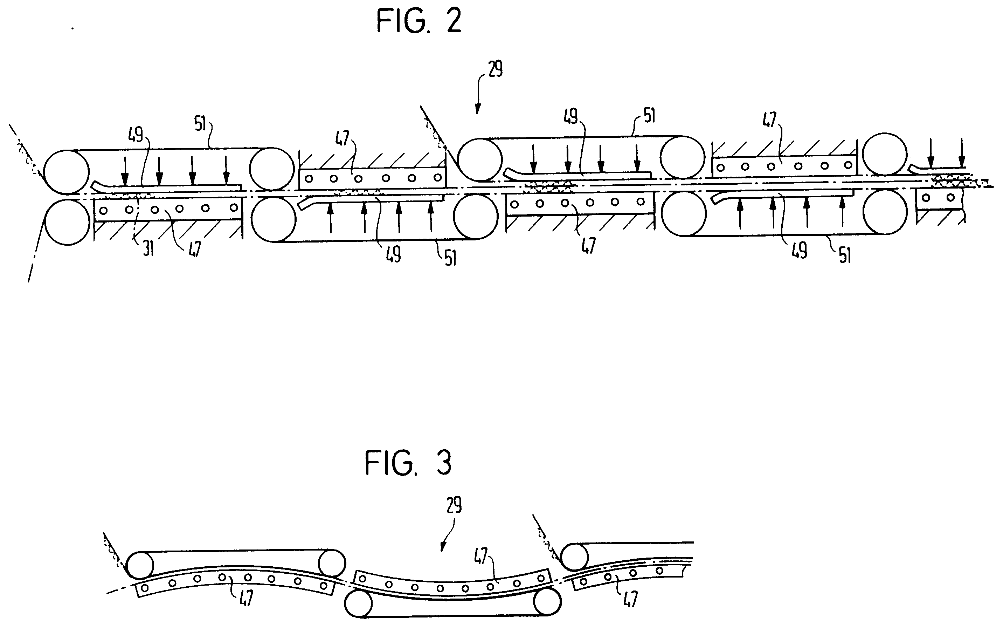

Fig. 2 zeigt eine weitere Ausgestaltung der Heizvorrichtung 29, nach der die Heizvorrichtung in Bewegungsrichtung der Halbfertigbahn 31 in einzelne Segmente aufgeteilt ist, welche abwechselnd zur Beheizung der einen bzw. anderen Oberfläche der Halbfertigbahn 31 dienen. Dabei sind die einzelnen Segmente praktisch identisch aufgebaut, jedoch abwechselnd um eine horizontale Achse gespiegelt angeordnet. Jedes Segment besteht aus einer raumfesten beheizten Platte 47, mit der ein oder mehrere Andruckschuhe 49 zusammenwirken. Die Andruckschuhe 49 sind im Gegensatz zu den Druckschuhen 35 jedoch nicht beheizt und können daher ihren Druck über ein umlaufendes Endlosband 51 auf die Halbfertigbahn 31 ausüben, wobei das Endlosband 51 den Transport der Halbfertigbahn 31 durch die erfindungsgemäße Einrichtung bewirkt.

In gleicher Weise könnte so auch die Heizvorrichtung 41 ausgebildet sein.

In einer weiteren Ausgestaltung der Heizvorrichtung 29 nach Fig. 3 können die Heizplatten 47 abwechselnd konkav bzw. konvex ausgebildet sein, so daß keine Druckschuhe für das Andrücken der Halbfertigbahn 31 an die beheizte Oberfläche der Platten 47 erforderlich sind, da das Andrücken bereits durch die Zugspannung in der Halbfertigbahn 31 bewirkt wird.

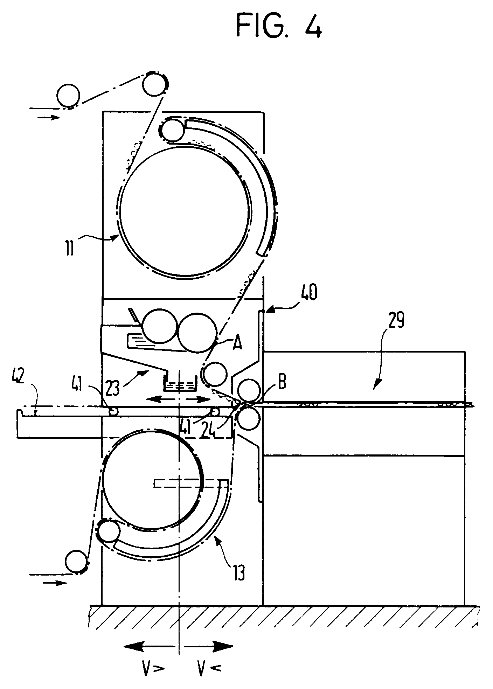

Wie aus Fig. 4 ersichtlich, sind das Leimwerk 23 und der Vorheizer 11 zu einer Einheit 40 zusammengebaut. Die Einheit 40 ist über Rollen 41 verschiebbar auf ausladenden Schienen 42 auf dem Vorheizer 13 gelagert.

Wird die Bahngeschwindigkeit V vergrößert, kann die Einheit 40 in der Zeichnung der Fig. 4 nach links verschoben werden. Hierdurch wird dem Abstand zwischen dem von der Anpreßvorrichtung 24 gebildeten Zusammenführpunkt B für die Teilbahn und der Leimauftragsstelle A vergrößert. Auf diese Weise wird die ausreichende Entfeuchtung des Leimauftrages trotz erhöhter Bahngeschwindigkeit gewährleistet. Die Entfeuchtung des Leimauftrages erfolgt durch Kapillarwirkung der Teilbahn.

In gleicher Weise kann die an die Heizvorrichtung 29 anschließende, nicht dargestellte Einheit von Vorheizer 15 und Leimwerk 27 verschiebbar ausgestaltet werden.

Das Verschieben der Einheit 40 kann abhängig von der Bahngeschwindigkeit V manuell oder selbsttätig erfolgen. Es kann sich eine übliche Trockenpartie anschließen.

## Patentansprüche

1. Verfahren zum Herstellen von Wellpappe, bei dem
a) die Wellpappe durch Verkleben von mindestens drei einzelnen Teilbahnen (3, 5, 7) an jeweils zwei einander zugekehrten Oberflächen hergestellt wird,
b) wobei in einem Arbeitsgang an einem ersten Leimauftragspunkt (A) eine erste Teilbahn (3) mit Leim beschichtet wird und
c) in einem ersten Zusammenführpunkt (B) die erste Teilbahn (3) mit einer zweiten Teilbahn (5) zu einer Halbfertigbahn (31) verklebt werden und
d) wobei im selben Arbeitsgang an einem zweiten Leimauftragspunkt (D) eine dritte Teilbahn (7) oder die Halbfertigbahn (31) mit Leim beschichtet wird und
e) in einem entlang dem Bahnlauf gegenüber dem ersten Zusammenführpunkt (B) versetzten zweiten Zusammenführpunkt (C) die dritte Teilbahn (7) und die Halbfertigbahn (31) verklebt werden,
**dadurch gekennzeichnet**,
f) daß zwischen dem ersten und zweiten Zusammenführpunkt (B, C) die Halbfertigbahn (31) wenigstens an derjenigen Oberfläche beheizt wird, die am zweiten Zusammenführpunkt (C) mit der ihr zugekehrten Oberfläche der dritten Teilbahn (7) verklebt wird.

2. Verfahren nach Anspruch 1, **dadurch gekennzeichnet**, daß die Bahnlaufzeit zwischen dem ersten oder zweiten Leimauftragspunkt (A, D) und dem ersten oder zweiten Zusammenführpunkt (B, C) kleiner oder gleich 200 ms ist.

3. Verfahren nach Anspruch 1 oder 2, **dadurch gekennzeichnet**, daß eine oder beide mit Leim zu beschichtende Bahnen (3, 7) vor dem Beschichten vorgeheizt werden.

4. Verfahren nach Anspruch 3, **dadurch gekennzeichnet**, daß auch die nicht mit Leim zu beschichtende Bahn (5) vor dem Zusammenführen mit der damit zu verklebenden Bahn (3) vorgeheizt wird.

5. Verfahren nach Anspruch 3 oder 4, **dadurch gekennzeichnet**, daß das Vorheizen der Bahnen (3, 5, 7) durch In-Kontakt-Bringen einer oder beider Bahnoberflächen mit einer Heizoberfläche erfolgt.

6. Verfahren nach einem der vorhergehenden Ansprüche, **dadurch gekennzeichnet**, daß die Bahnlaufzeit zwischen dem Ende des Vorheizens einer Bahn (3, 7) und dem Leimauftragspunkt (A, D) größer oder gleich 200 ms ist.

7. Verfahren nach einem der vorhergehenden Ansprüche, **dadurch gekennzeichnet**, daß die Wellpappe nach dem Zusammenführen aller Bahnen an wenigstens einer Seite beheizt wird.

8. Verfahren nach einem oder mehreren der Ansprüche 1 bis 7, **dadurch gekennzeichnet**, daß der Abstand zwichen Leimauftragspunkt (A, D) und Zusammenführpunkt (B, C) abhängig von der Bahngeschwindigkeit (v) verändert wird.

9. Verfahren nach Anspruch 8, **dadurch gekennzeichnet**, daß bei Erhöhung der Bahngeschwindigkeit (v) gegenüber einer vorbestimmten, mittleren Bahngeschwindigkeit der Abstand zwischen Leimauftragspunkt (A, D) und Zusammenführpunkt (B, C) vergrößert wird und umgekehrt.

10. Einrichtung für eine Wellpappenanlage zum Verkleben von mindestens drei einzelnen Teilbahnen an jeweils zwei einander zugekehrten Oberflächen
a) mit einem erstes Leimwerk (23) für das Beleimen einer ersten Teilbahn (3) und
b) mit einer dem ersten Leimwerk (23) nachgeschalteten ersten Anpreßvorrichtung (24) für das Zusammenführen und Verkleben der ihr zugeführten beleimten ersten Teilbahn (3) mit einer ihr ebenfalls zugeführten zweiten Teilbahn (5) zu einer Halbfertigbahn (31) in einem ersten Zusammenführpunkt (B),
c) mit einem zweiten Leimwerk (27) für das Beleimen der Halbfertigbahn (31) oder einer dritten Teilbahn (7) und
d) mit einer zweite Anpreßvorrichtung (46) für das Zusammenführen und Verkleben der Halbfertigbahn (31) mit einer dritten Teilbahn (7) in einem zweiten, gegenüber dem ersten Zusammenführpunkt (B) versetzten Zusammenführpunkt (C),
**dadurch gekennzeichnet**,
e) daß zwischen der ersten und zweiten Anpreßvorrichtung (24, 46) eine Heizvorrichtung (29) für das ein- oder beidseitige Beheizen der Halbfertigbahn (31) vorgesehen ist, wobei die Heizvorrichtung (29) die Halbfertigbahn (31) wenigstens an derjenigen Oberfläche beheizt, die am zweiten Zusammenführpunkt (C) mit der ihr zugekehrten Oberfläche der dritten Teilbahn (7) verklebt wird.

11. Einrichtung nach Anspruch 10, **dadurch gekennzeichnet**, daß wenigstens ein Vorheizer (11, 13, 15) für das Beheizen wenigstens einer Oberfläche einer Bahn (3, 5, 7) vorgesehen ist, welcher in Richtung des Bahnlaufs vor dem Leimwerk (23, 27) oder vor der Anpreßvorrichtung (24, 46) angeordnet ist.

12. Einrichtung nach Anspruch 11, **dadurch gekennzeichnet**, daß die Bahnlänge zwischen Vorheizer (11, 13, 15) und Anpreßvorrichtung (24, 46) möglichst gering ist.

13. Einrichtung nach Anspruch 12, **dadurch gekennzeichnet**, daß Vorheizer (11, 13, 15) und Anpreßvorrichtung (24, 26) und/ oder Leimwerk (23, 27) zu einer Einheit zusammenbaubar oder integriert ausgebildet sind.

14. Einrichtung nach Anspruch 13, **dadurch gekennzeichnet**, daß die Heizvorrichtung (29) eine beheizte Anlagefläche (33) für das Beheizen der einen Oberfläche der Halbfertigbahn (31) und einen oder mehrere sich quer zur Bewegungsrichtung der Bahn (31) erstreckende, beheizte Druckschuhe (35) aufweist, welche die Bahn gegen die Anlagefläche (33) drücken und die andere Oberfläche der Bahn (31) beheizen.

15. Einrichtung nach Anspruch 13 oder 14, **dadurch gekennzeichnet**, daß die Heizvorrichtung (29) in Richtung der Bahnbewegung in mehrere Segmente unterteilt ist.

16. Einrichtung nach Anspruch 15, **dadurch gekennzeichnet**, daß die Segmente abwechselnd die eine oder andere Bahnoberfläche beheizen.

17. Einrichtung nach Anspruch 16, **dadurch gekennzeichnet**, daß die beheizten Anlageflächen (49) der Segmente abwechselnd konkav und konvex ausgebildet sind.

18. Einrichtung nach Anspruch 10, **dadurch gekennzeichnet**, daß die Leimwerke (23, 27) gegenüber ihren nachfolgenden Heizvorrichtungen (29) verschiebbar sind, so daß der Abstand zwischen Leimauftragspunkt (A, D) und Zusammenführungspunkt (B, C) bei Erhöhung der Bahngeschwindigkeit vergrößert wird und umgekehrt.

19. Einrichtung nach Anspruch 18, **dadurch gekennzeichnet**, daß das Einstellen des Abstandes zwischen Leimauftragspunkt (A, D) und Zusammenführpunkt (D, C) durch Verschieben des Leimwerkes manuell oder selbsttätig erfolgt.

## Claims

1. Method of producing corrugated cardboard, wherein
a) the corrugated cardboard is produced by bonding together at least three individual part webs (3, 5, 7), in each case on two opposed surfaces,
b) in which procedure in an operation at a first adhesive application point (A) a first part web (3) is coated with adhesive and
c) at a first bringing-together point (B) the first part web (3) is bonded to a second part web (5) to form a semi-finished web (31) and,
d) in the same operation, at a second adhesive application point (D) a third part web (7) or the semi-finished web (31) is coated with adhesive and
e) at a second bringing-together point (C), which is displaced along the web path relative to the first bringing-together point (B), the third part web (7) and the semi-finished web (31) are bonded together,
**characterised in that**
(f) between the first and the second bringing-together points (B, C) the semi-finished web (31) is heated at least on that surface which, at the second bringing-together point (C), is bonded to the opposed surface of the third part web (7).

2. Method according to claim 1, **characterised in that** the web travel time between the first or second adhesive application point (A, D) and the first or second bringing-together point (B, C) is less than or equal to 200 ms.

3. Method according to claim 1 or 2, **characterised in that** one or both webs (3, 7) to be coated with adhesive are preheated prior to being coated.

4. Method according to claim 3, **characterised in that** also the web (5) that is not to be coated with adhesive is preheated prior to being brought together with the web (3) to which it is to be bonded.

5. Method according to claim 3 or 4, **characterised in that** the preheating of the webs (3, 5, 7) is effected by bringing one or both web surfaces into contact with a heating surface.

6. Method according to any one of the preceding claims, **characterised in that** the web travel time between the end of the preheating of a web (3, 7) and the adhesive application point (A, D) is greater than or equal to 200 ms.

7. Method according to any one of the preceding claims, **characterised in that** the corrugated cardboard is heated on at least one side after all the webs have been brought together.

8. Method according to one or more of claims 1 to 7, **characterised in that** the distance between the adhesive application point (A, D) and the bringing-together point (B, C) is altered in dependence upon the web speed (v).

9. Method according to claim 8, **characterised in that** in the event of an increase in the web speed (v) relative to a predetermined, average web speed, the distance between the adhesive application point (A, D) and the bringing-together point (B, C) is increased, and *vice versa*.

10. Device for a corrugated cardboard plant for bonding together at least three individual part webs, in each case on two opposed surfaces,
a) having a first adhesive device (23) for applying adhesive to a first part web (3) and
b) having a first pressing arrangement (24), arranged downstream of the first adhesive device (23), for bringing together the adhesive-coated first part web (3) that is supplied to it with a second part web (5), which is likewise supplied to it, and bonding them together to form a semi-finished web (31) at a first bringing-together point (B),
c) having a second adhesive device (27) for applying adhesive to the semi-finished web (31) or to a third part web (7) and
d) having a second pressing arrangement (46) for bringing together the semi-finished web (31) with a third part web (7) and bonding them together at a second bringing-together point (C) that is displaced relative to the first bringing-together point (B),
**characterised in that**
e) between the first and the second pressing arrangements (24, 46) there is provided a heating device (29) for heating the semi-finished web (31) on one or both sides, the heating device (29) heating the semi-finished web (31) at least on that surface which, at the second bringing-together point (C), is bonded to the opposed surface of the third part web (7).

11. Device according to claim 10, **characterised in that** at least one preheater (11, 13, 15) is provided for heating at least one surface of a web (3, 5, 7), the preheater (11, 13, 15) being arranged in the direction of web travel upstream of the adhesive device (23, 27) or upstream of the pressing arrangement (24, 46).

12. Device according to claim 11, **characterised in that** the web length between the preheater (11, 13, 15) and the pressing arrangement (24, 46) is as short as possible.

13. Device according to claim 12, **characterised in that** the preheater (11, 13, 15) and the pressing arrangement (24, 46) and/or the adhesive device (23, 27) can be assembled to form a unit or are of integrated construction.

14. Device according to claim 13, **characterised in that** the heating device (29) has a heated contact surface (33) for heating one surface of the semi-finished web (31) and one or more heated pressure shoes (35), extending transversely to the direction of movement of the web (31), which press the web against the contact surface (33) and heat the other surface of the web (31).

15. Device according to claim 13 or 14, **characterised in that** the heating device (29) is divided into a number of segments in the direction of movement of the web.

16. Device according to claim 15, **characterised in that** the segments heat one or the other web surface alternately.

17. Device according to claim 16, **characterised in that** the heated contact surfaces (49) of the segments are alternately of concave and convex construction.

18. Device according to claim 10, **characterised in that** the adhesive devices (23, 27) can be displaced relative to their subsequent heating devices (29), so that the distance between the adhesive application point (A, D) and the bringing-together point (B, C) is increased in the event of an increase in web speed, and *vice versa*.

19. Device according to claim 18, **characterised in that** the adjustment of the distance between the adhesive application point (A, D) and the bringing-together point (D, C) is effected manually or automatically by displacement of the adhesive device.

## Revendications

1. Procédé de fabrication de carton ondulé, selon lequel
a) on fabrique le carton ondulé par collage d'au moins trois bandes partielles individuelles (3,5,7) sur respectivement deux surfaces qui sont tournées l'une vers l'autre,
b) par quoi, lors d'une étape opératoire, en un premier point d'application de colle (A), une première bande partielle (3) est recouverte de colle, et
c) au niveau d'un premier point de réunion (B), la première bande partielle (3) est collée sur une seconde bande partielle (5) pour former une bande semi-finie (31), et
d) par quoi, lors de la même étape opératoire, en un second point d'application de colle (D), une troisième bande partielle (7) ou la bande semi-finie (31) est recouverte de colle, et
e) en un second point de réunion (C) décalé le long de la circulation de la bande par rapport au premier point de réunion (B), la troisième bande partielle (7) et la bande semi-finie (31) sont réunies par collage,
caractérisé en ce
f) qu'entre les premier et second points de réunion (B,C), la bande semi-finie (31) est chauffée au moins au niveau de la surface qui est collée, au niveau du second point de réunion (C), sur la surface, tournée vers elle, de la troisième bande partielle (7).

2. Procédé selon la revendication 1, caractérisé en ce que le temps de circulation de la bande entre le premier ou le second point d'application de colle (A,D) et le premier ou le second point de réunion (B,C) est inférieur ou égal à 200 ms.

3. Procédé selon la revendication 1 ou 2, caractérisé en ce qu'une bande ou les deux bandes (3,7) devant être recouvertes de colle, sont préalablement chauffées avant l'encollage.

4. Procédé selon la revendication 3, caractérisé en ce que la bande (5), qui ne doit pas être recouverte de colle, est préalablement chauffée avant d'être réunie à la bande (3) devant être réunie à elle par collage.

5. Procédé selon la revendication 3 ou 4, caractérisé en ce que le préchauffage des bandes (3,5,7) s'effectue par mise en contact d'une surface ou des deux surfaces de la bande avec une surface de chauffage.

6. Procédé selon l'une des revendications précédentes, caractérisé en ce que la durée de circulation de la bande entre la fin du préchauffage d'une bande (3,7) et le point d'application de colle (A,D) est supérieure ou égale à 200 ms.

7. Procédé selon l'une des revendications précédentes, caractérisé en ce que le carton ondulé est chauffé sur au moins un côté après la réunion de toutes les bandes.

8. Procédé selon une ou plusieurs des revendications 1 à 7, caractérisé en ce que la distance entre le point d'application de colle (A,D) et le point de réunion (B,C) est modifié en fonction de la vitesse de bande (v).

9. Procédé selon la revendication 8, caractérisé en ce que dans le cas d'un accroissement de la vitesse de bande (v) par rapport à une vitesse de bande moyenne prédéterminée, la distance entre le point d'application de colle (A,D) et les points de réunion (B,C) est accrue et inversement.

10. Dispositif pour une installation de fabrication de carton ondulé pour le collage d'au moins trois bandes partielles individuelles au niveau respectivement de deux surfaces tournées l'une vers l'autre,
a) comportant une première unité d'encollage (23) pour réaliser l'encollage d'une première bande partielle (3), et
b) un premier dispositif de serrage (24) branché en aval de la première unité d'encollage (23) pour réunir et coller la première bande partielle encollée (3), qui lui est envoyée, sur une seconde bande partielle (5), qui lui est également envoyée, pour former une bande semi-finie (31) en un premier point de réunion (B),
c) une seconde unité d'encollage (27) pour l'encollage de la bande semi-finie (31) ou d'une troisième bande partielle (7), et
d) un second dispositif de serrage (46) pour la réunion et le collage de la bande semi-finie (31) avec une troisième bande partielle (7) en un second point de réunion (C) décalé par rapport au premier point de réunion (B),
caractérisé en ce
e) qu'entre les premiers dispositifs de serrage (24,46) est disposé un dispositif de chauffage (29) pour chauffer sur une face ou les deux faces la bande semi-finie (31), le dispositif de chauffage (29) chauffant la bande semi-finie (31) au moins sur la surface qui, au niveau du second point de réunion (C), est collée à la surface, tournée vers elle, de la troisième bande partielle (7).

11. Dispositif selon la revendication 10, caractérisé en ce qu'au moins un dispositif de préchauffage (11,13,15) est prévu pour le chauffage d'au moins une surface d'une bande (3,5,7), qui est disposée en amont de l'unité d'encollage (23,27) ou en amont du dispositif de serrage (24,26) dans la direction de circulation de la bande.

12. Dispositif selon la revendication 11, caractérisé en ce que la longueur de la bande entre le dispositif de préchauffage (11,13,15) et le dispositif de serrage (24,26) est aussi faible que possible.

13. Dispositif selon la revendication 12, caractérisé en ce que le dispositif de préchauffage (11,13,15) et le dispositif de serrage (24,26) et/ou l'unité d'encollage (23,27) sont agencés de manière à pouvoir être réunis ou intégrés sous la forme d'une unité.

14. Dispositif selon la revendication 13, caractérisé en ce que le dispositif de chauffage (29) est une surface d'application chauffée (33) pour le chauffage d'une surface de la bande semi-finie (31) et un ou plusieurs sabots de compression chauffés (35), qui s'étendent transversalement par rapport à la direction de la bande (31) et qui serrent la bande contre la surface d'application (33) et chauffent l'autre surface de la bande (31).

15. Dispositif selon la revendication 13 ou 14, caractérisé en ce que le dispositif de chauffage (29) est subdivisé en plusieurs segments dans la direction de déplacement de la bande.

16. Dispositif selon la revendication 15, caractérisé en ce que les segments chauffent alternativement l'une ou l'autre des surfaces de la bande.

17. Dispositif selon la revendication 16, caractérisé en ce que les surfaces d'application chauffées (49) des segments sont agencées de manière à être alternativement concaves et convexes.

18. Dispositif selon la revendication 10, caractérisé en ce que les unités d'encollage (23,27) sont déplaçables par rapport aux dispositifs de chauffage (29) disposés en aval de ces unités, de sorte que la distance entre le point d'application de colle (A, D) et le point de réunion (B, C) est accrue lorsque la vitesse de la bande augmente et inversement.

19. Dispositif selon la revendication 18, caractérisé en ce que le réglage de la distance entre le point d'application de colle (A,D) et le point de réunion (D,C) est exécuté manuellement ou automatiquement par déplacement de l'unité d'encollage.
